# EUROPÄISCHE PATENTSCHRIFT

(11) **EP 1 604 125 B1**
(45) Veröffentlichungstag und Bekanntmachung des Hinweises auf die Patenterteilung: **22.07.2009**
(21) Anmeldenummer: 04719980.7
(22) Anmeldetag: 12.03.2004
(51) Int. Cl.: F16D 65/092

(54) **Scheibenbremse**
Disk brake
Frein à disque

(30) Priorität: 20.03.2003 DE 10312478
(43) Veröffentlichungstag der Anmeldung: 14.12.2005
(73) Patentinhaber: Lucas Automotive GmbH, 56070 Koblenz (DE)
(72) Erfinder: SCHOG, Michael, 56753 Mertloch (DE); WOLLENWEBER, Karl-Heinz, 56299 Ochtendung (DE); SCHROETER, Christian, 53489 Sinzig (DE); HEES, Dirk, 56727 Mayen (DE); ZENZEN, Guido, 56290 Macken (DE)
(74) Vertreter: von Hellfeld, Axel
(86) Internationale Anmeldenummer: PCT/EP2004/002607
(87) Internationale Veröffentlichungsnummer: WO 2004/083668

(56) Entgegenhaltungen:
- DE-A- 4 324 988
- US-A- 5 860 496
- US-A- 6 062 349
- PATENT ABSTRACTS OF JAPAN vol. 015, no. 199 (M-1115), 22. Mai 1991 (1991-05-22) -& JP 03 051525 A (TOKICO LTD), 5. März 1991 (1991-03-05)

## Beschreibung

Die Erfindung betrifft eine Scheibenbremse mit einem am Fahrzeug befestigbaren, Bolzen aufweisenden Bremsträger, Bremsbelägen, und einem Sattel bzw. Rahmen.

Bremsen dieser Art sind allgemein bekannt. Üblicherweise werden die Bremsbeläge, bestehend aus Tragplatte und Reibbelag, mittels am Bremsträger befestigter Bolzen axial in Bezug auf die Bremsscheibe geführt. "Axial" bei Scheibenbremsen bedeutet im Allgemeinen: in einer Richtung parallel zur Drehachse der Bremsscheibe. "Radial" bedeutet entsprechend eine Richtung senkrecht zu einer axialen Richtung im vorstehenden Sinne.

Den Stand der Technik derartiger Scheibenbremsen repräsentieren z.B. die folgenden Patentdokumente: DE 1 238 284, DE 1 505 491, DE 1 575 920, DE 2 804 808, DE 2 845 404, DE 41 15 064 und DE 4 416 815. Weitere Patentdokumente, die auch zum Stand der Technik gehören sind: DE 10113 347, US 3915263 und US 4355707.

US 6,062,349 zeigt eine Scheibenbremse gemäß dem Oberbegriff der Ansprüche 1 und 9, deren Bremsbeläge mit einem offenen, rechtwinkeligen Ausschnitt auf der Auslaufseite versehen sind, um einen möglichst geringen Gleitwiderstand während des Bremsens zu erzeugen.

US 5,860,496 zeigt eine Scheibenbremse, deren Bremsbeläge in einer axialen Richtung auf die Bolzen montiert sind.

Eine andauernde technische Aufgabenstellung beim Entwurf von Scheibenbremsen ist die Reduzierung des Herstellungsaufwandes und des Gewichts der Bremse bei gleichzeitiger hoher Funktionszuverlässigkeit und geringem Wartungsaufwand. Die beiden letztgenannten Zielvorgaben beinhalten insbesondere auch die Vermeidung von durch Rost bedingten Störanfälligkeiten der Bremse. Ein besonderes Problem bei allen Bremskonstrüktionen ist die Vermeidung von Quietschgeräuschen durch Schwingungen. Diesen technischen Zielsetzungen widmet sich auch die vorliegende Erfindung.

Die vorliegende Erfindung sieht eine Scheibenbremse gemäß Anspruch 1 und einen Bremsbelag gemäß Anspruch 9 vor. Bevorzugte Merkmale der Erfindung sind in den abhängigen Ansprüche aufgeführt.

Durch diesen Bremsaufbau wird nicht nur das Erreichen der oben angesprochenen Zielsetzungen gefördert, sondern auch ein einfacher Zusammenbau der Bremse ermöglicht, was insbesondere bei Wartungsarbeiten von Vorteil ist.

Eine bevorzugte Ausgestaltung der Scheibenbremse sieht vor, dass der auf der fahrzeugäußeren Seite der Bremse (also derjenigen Seite, die auf der von außen sichtbaren Seite der Bremsscheibe liegt) angeordnete Bremsbelag mit U-förmigen Ausnehmungen die zugeordneten Bolzen umgreifend axial in Bezug auf die Bremsscheibe bewegbar geführt ist.

Gemäß einer weiteren bevorzugten Ausgestaltung der Erfindung sind beide Bremsbeläge jeweils auf beiden Seiten (einlaufende und auslaufende Seite der Bremse) mit U-förmigen Ausnehmungen versehen und Bolzen des Bremsträgers greifen zur axialen Führung der Bremsbeläge in diese Ausnehmungen ein.

Bei den vorstehend beschriebenen Varianten der Erfindung ist bevorzugt vorgesehen, dass die Bremsbeläge in den U-förmigen Ausnehmungen nur eine Linienberührung mit den jeweils zugeordneten Bolzen der Bremsträger aufweisen. Die Abstützflächen der Bremsbeläge an den Haltebolzen sollen also bevorzugt so klein wie möglich sein, was durch den Begriff "Linienberührung" ausgedrückt sein soll.

Eine andere Variante der Erfindung sieht vor, dass die Bolzen, welche die Bremsbeläge abstützen, aus einem anderen Material gefertigt sind als der Bremsträger. Als Material für die Bolzen kommt insbesondere in Betracht ein geringrostender Werkstoff, wie z.B. die Werkstoffe mit der Bezeichnung 42CrMoS4V (Werkstoff Nr. 1.7227) oder 17 CrNiMo 6 (Werkstoff Nr. 1.6587; die angegebenen Werkstoffnummern beziehen sich auf die DIN, Deutsche Industrie Norm). Die Bolzen zum Abstützen der Bremsbeläge können auch aus hochwertigem Schraubenstahl hergestellt werden, der korrosionsgeschützt ist.

Die Bolzen zum Abstützen der Bremsbeläge können auch mit einem Korrosionsschutz beschichtet sein. Auch kann eine Beschichtung vorgesehen sein, um die Verschiebbarkeit der Bremsbeläge langfristig zu gewährleisten, auch unter chemisch aggressiven Bedingungen (Streusalz oder dergleichen). Eine bevorzugte Variante der Erfindung sieht vor, dass die von den Achsen der Bolzen, welche die Bremsbeläge abstützen, aufgespannte Ebene einen kleineren radialen Abstand von der Rotationsachse der Bremsscheibe hat als der Flächenschwerpunkt der Reibbeläge. Unter "Flächenschwerpunkt" versteht der Fachmann denjenigen Ort des Reibbelages des Bremsbelages, an dem der Reibbelag in horizontaler Ausrichtung ausbalanciert abgestützt werden kann.

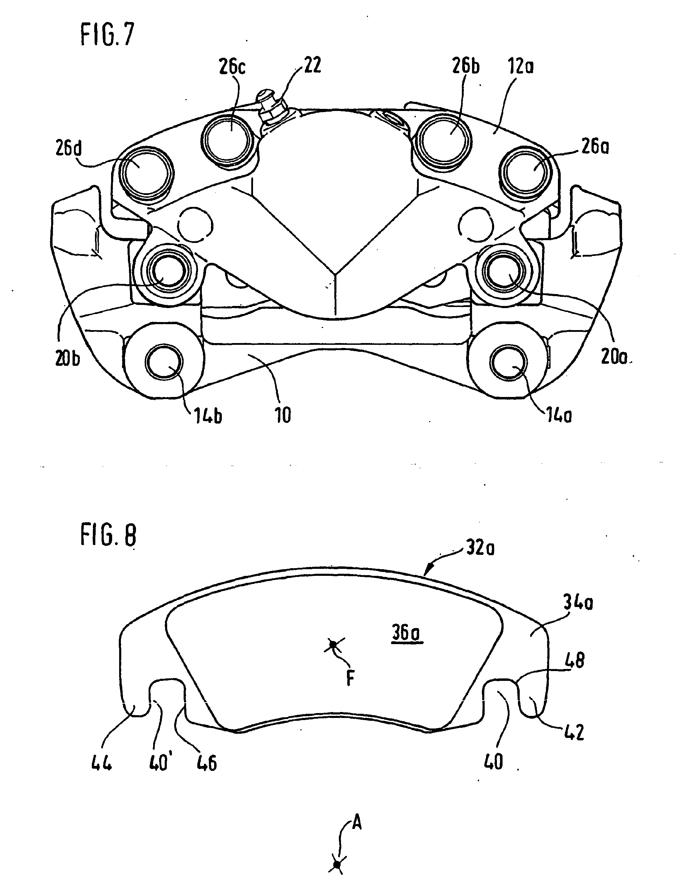

Weiterhin sind die genannten Abmessungen der Bremsenbauteile so gewählt, dass bei Einleitung einer Bremskraft, die das Fahrzeug bis zu einer vorgegebenen Verzögerung von beispielsweise etwa 0,1 g abzubremsen vermag, nur Zugkräfte auf die Bremsbeläge wirken. Wenn in Figur 8 sich die Bremsscheibe gegen den Uhrzeigersinn um die Achse A dreht, dann ist die Einlaufseite der Bremse rechts, also entsprechend der Ausnehmung 40, während die Auslaufseite der Bremse links liegt, entsprechend der Ausnehmung 40'. Bei Bremskräften, die unter gutem Reibeingriff zwischen Radreifen und Fahrbahn die genannte maximale Fahrzeug-Verzögerung im Bereich von 0,1 g nicht überschreiten, treten deshalb nur Zugkräfte am Bremsbelag 32a auf, d.h. auf der Einlaufseite (Figur 8, rechts) werden die Bremskräfte von der einlaufseitigen Nase 42 des Bremsbelages aufgenommen (die Reibkräfte wirken in Figur 8 nach links). Erst wenn eine Bremskraft oberhalb einer Verzögerung von etwa 0,1 g eingeleitet wird, schlägt die Auflauffläche 46 des Bremsbelages gegen den zugeordneten Bolzen in der Ausnehmung 40' und die Bremskräfte werden mit Zugkräften (Nase 42) und Druckkräften an der Fläche 46 aufgefangen.

Die vorstehend genannten, bevorzugt beim fahrzeugäußeren Bremsbelag vorgesehenen Vorgaben können gemäß einer weiteren Ausgestaltung der Erfindung auch für den fahrzeuginneren Bremsbelag vorgesehen werden.

Gemäß einer bevorzugten Weiterbildung der Erfindung hat die Ebene, welche durch die Mittelachsen der Bolzen geht, welche den Bremsbelag abstützen, einen kleineren radialen Abstand von der Scheibenachse als der Flächenschwerpunkt der Reibbeläge. Der Unterschied der genannten radialen Abstände ist bevorzugt größer als 5 %, weiter bevorzugt als 10 % und noch weiter bevorzugt als 15 % des größeren der beiden genannten Abstände.

Nachfolgend werden Ausführungsbeispiele der Erfindung anhand der Zeichnung näher erläutert. Es zeigt:
- Figur 1: eine Scheibenbremse in Vorderansicht, d.h. im montierten Zustand von der fahrzeugäußeren Seite her gesehen;
- Figur 2: die Scheibenbremse gemäß Figur 1 In Draufsicht, von oben auf den Sattel;

- Figur 3: die Scheibenbremse gemäß den Figuren 1 und 2 von der Seite, d.h. in Richtung der Ebene der Bremsscheibe;
- Figur 4: die Scheibenbremse gemäß den Figuren 1 bis 3 im Schnitt;
- Figur 5: den Bremsträger in Vorderansicht;
- Figur 6: den Bremsträger in Draufsicht;
- Figur 7: die Scheibenbremse gemäß den Figuren 1 bis 6 in Rückansicht, d.h. in montiertem Zustand vom Fahrzeuginneren her gesehen;
- Figur 8: einen Bremsbelag zur Verwendung bei einer Scheibenbremse gemäß den Figuren 1 bis 7;
- Figur 9: eine Ausgestaltung des Bremsträgers in Draufsicht, und
- Figur 10: den Bremsträger gemäß Figur 9 in Rückansicht.

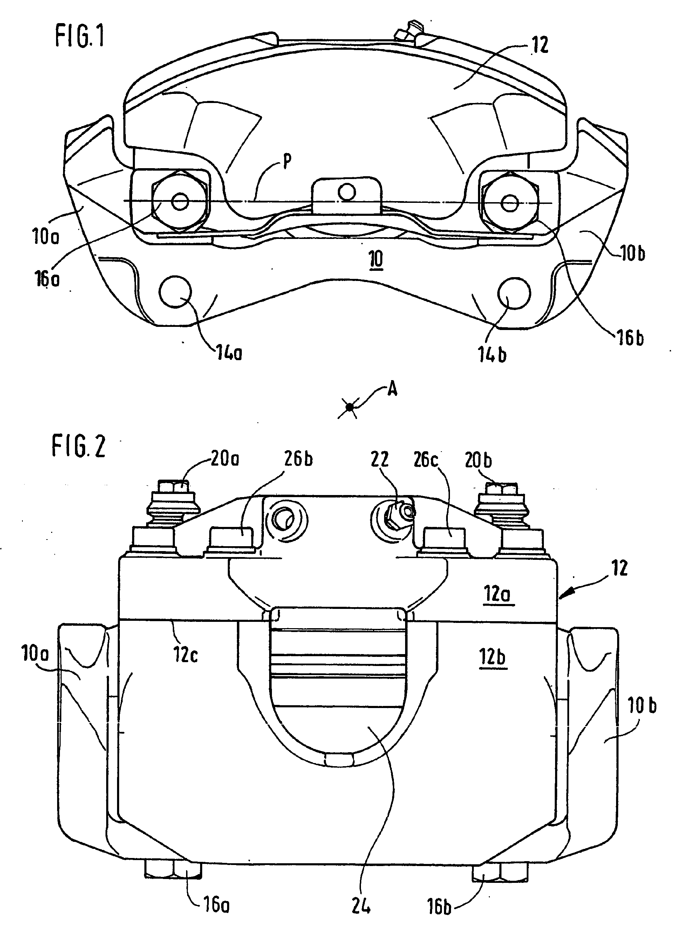

Wie insbesondere in den Figuren 1, 2, 5, 6 dargestellt ist, weist ein Bremsträger 10 zwei Arme 10a, 10b auf. Über dem Bremsträger ist ein Sattel 12 angeordnet, der bei den dargestellten Ausführungsbeispielen als Schwimmsattel und zweiteilig ausgebildet ist. Der Sattel weist einen fahrzeuginneren Abschnitt 12a und einen fahrzeugäußeren Abschnitt 12b auf. Die Abschnitte 12a, 12b sind fest miteinander verbunden durch Schrauben 26a, 26b, 26c, 26d (vgl. Figuren 2 und 7), Der Bremsträger 10 ist in üblicher Weise fest am Fahrzeug befestigt, hierzu dienen Löcher 14a, 14b und Schrauben (nicht gezeigt).

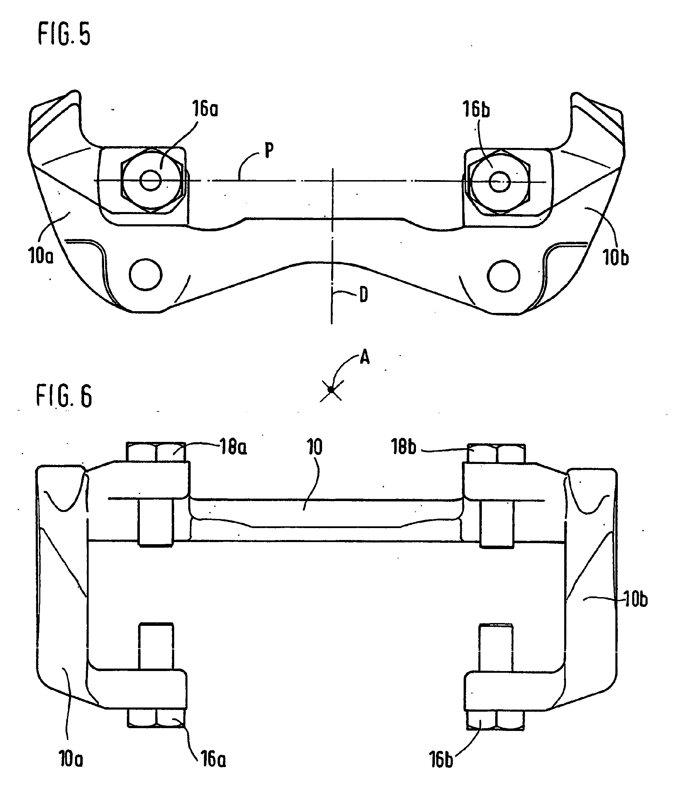

Wie insbesondere Figur 6 (und Figuren 1, 3, 4, 5) zeigen, sind Bolzenschrauben 16a, 16b, 18a, 18b mit dem Bremsträger 10 fest verbunden. Die genannten Bolzenschrauben sind über einen Teil ihrer Längserstreckung mit Außengewinde versehen, welches in ein passendes Innengewinde im Bremsträger 10 eingeschraubt ist. Die in Figur 6 freiliegenden Abschnitte der Bolzenschrauben sind gewindefrei. Diese blanken Abschnitte der Bolzenschrauben 16a, 16b, 18a, 18b dienen, wie weiter unten näher beschrieben ist, zur Abstützung der Bremsbeläge.

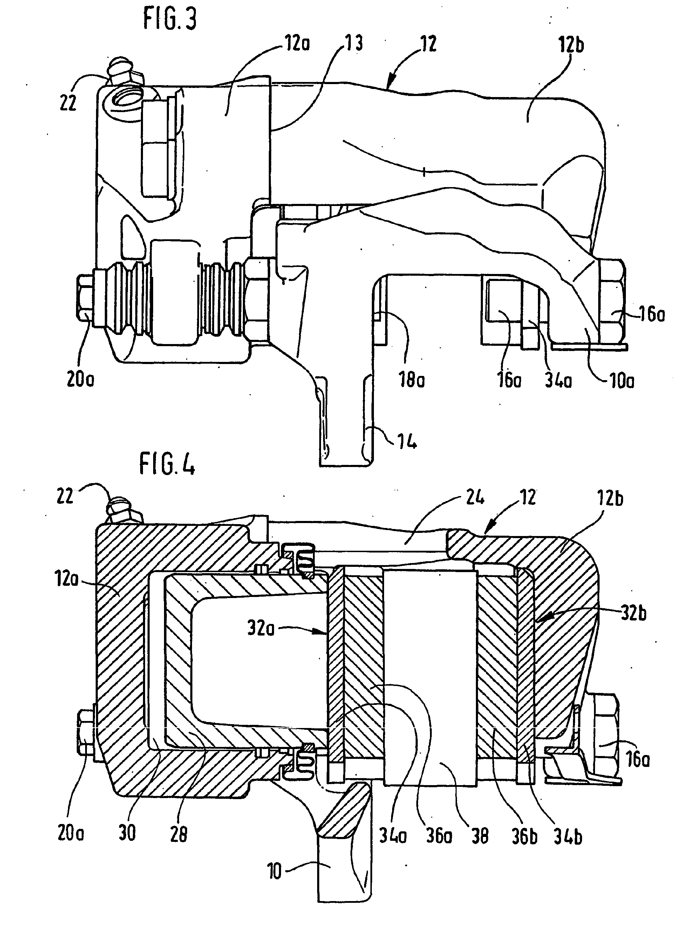

Wie insbesondere den Figuren 3, 4, 7 zu entnehmen ist, gleitet der Schwimmsattel 12 auf Bolzenschrauben 20a, 20b. Die Bolzenschrauben 20a, 20b sind in die fahrzeuginnenseitig gelegenen Bolzenschrauben 18a, 18b eingeschraubt, und zwar koaxial, wie insbesondere aus Figur 3 zu erkennen ist. Hierzu sind die Bolzenschrauben 18a, 18b, zentrisch mit einem Innengewinde versehen, in welches ein Außengewinde der Bolzenschrauben 20a, 20b jeweils einschraubbar ist. Somit sind die Bolzenschrauben 20a und 18a und auch die Bolzenschrauben 20b, 18b jeweils zueinander koaxial (vgl. Figur 3). Ebenso sind die Bolzenschrauben 16a, 18a koaxial und auch die Bolzenschrauben 16b, 18b (Figur 6).

Gemäß den Figuren 2 und 7 sind die beiden Sattelabschnitte 12a, 12b mittels Schrauben 26a, 26b, 26c, 26d fest miteinander verbunden. Die Anlageflächeder beiden Sattelabschnitte 12a, 12b ist in Figur 2 mit 12c bezeichnet.

Über einen Fluideinlass 22 wird in üblicher Weise Bremsfluid zum Bewegen des Kolbens 28 In eine Fluidkammer 30 eingeleitet (vgl. Figur 4). Wird also in der Kammer 30 der Fluiddruck erhöht, bewegt sich der Kolben 28 in Figur 4 nach rechts und der Sattel 12 entsprechend nach links.

Figur 8 zeigt einen (32a) der beiden baugleichen Bremsbeläge 32a, 32b (vgl. auch Figur 4). Der Bremsbelag 32a besteht aus einer Tragplatte 34a (aus Metall) und einem Reibbelag 36a. Der Reibbelag 36a verschleißt durch Reibung beim Bremsen. Figur 8 zeigt auch den Flächenschwerpunkt F des Reibbelages 32a. Der Bremsbelag weist auf der Einlaufseite und auf der Auslaufseite der Bremse jeweils eine U-förmige Ausnehmung 40, 40' auf. Figur 8 zeigt auch schematisch die Drehachse A der Bremsscheibe 38 (letztere In Figur 8 nicht gezeigt, vgl. Figur 4).

Die Bremsbeläge 32a, 32b werden mit ihren U-förmigen Ausnehmungen 40, 40' von oben auf die gewindefreien Abschnitte der Bolzenschrauben 16a, 16b bzw. 18a, 18b aufgesetzt. Dabei kommt es zu einer Linienberührung zwischen einer Wandung in den Ausnehmungen 40, 40' und der Oberfläche der jeweiligen Bolzenschraube 16a, 16b, 18a, 18b.

Die Bremsenbauteile, insbesondere die Positionen der Schraubenbolzen 16a, 16b, 18a, 18b und die Abstände zwischen den Ausnehmungen 40, 40' in den Bremsbelägen 32a, 32b und auch die Ausnehmungen 40, 40' selbst sind so bemessen, dass die Ebene, welche durch die Längsachsen der Bolzenschrauben 16a, 16b, 18a, 18b geht, einen geringeren radialen Abstand von der Drehachse A der Bremsscheibe (vgl. Figur 8) hat als der Flächenschwerpunkt F des Reibbelages. Die Ebene, welche durch die Längsachsen der Bolzenschrauben 16a, 16b, 18a, 18b aufgespannt wird, ist in Figur 1 und Figur 5 mit P bezeichnet. Eingezeichnet ist in Figur 5 schematisch auch die Position der Achse A der Bremsscheibe. Diese Achse steht senkrecht zur Zeichnungsebene, vgl. auch Figur 8. Der Abstand zwischen der Scheibenachse A und der von den Bolzenachsen aufgespannten Ebene P ergibt sich durch Fällung des Lotes von der Achse A auf die Ebene. Dieser Abstand ist in Figur 5 mit D bezeichnet.

Gemäß einer Variante der Erfindung sind die Bauteile so bemessen, dass die Längsachsen der Bolzen 16a, 16b, 18a, 18b einen kleineren radialen Abstand von der Bremsscheibenachse A haben als der Flächenschwerpunkt F des Reibbelages 36a, 36b.

Bei der ersten der beiden vorstehend erläuterten Varianten ("Ebene") beträgt der genannte Unterschied der Abstände bevorzugt mindestens 5 % des größeren der zu vergleichenden Werte, weiter bevorzugt mindestens 10 % und noch weiter bevorzugt mindestens 15 % des genannten Abstandes.

Weiterhin sind die genannten Abmessungen der Bremsenbauteile so gewählt, dass bei Einleitung einer Bremskraft, die das Fahrzeug bis etwa 0,1 g abzubremsen vermag, nur Zugkräfte auf die Bremsbeläge wirken. Wenn in Figur 8 sich die Bremsscheibe gegen den Uhrzeigersinn dreht (um die Achse A), dann ist die Einlaufseite der Bremse rechts, also entsprechend der Ausnehmung 40, während die Auslaufseite der Bremse links liegt, entsprechend der Ausnehmung 40'. Bei Bremskräften, die unter gutem Reibeingriff zwischen Radreifen und Fahrbahn die genannte maximale Fahrzeug-Verzögerung von 0,1 g nicht überschreiten, treten deshalb nur Zugkräfte am Bremsbelag 32a auf, d.h. auf der Einlaufseite (Figur 8, rechts) werden die Bremskräfte von der einlaufseitigen Nase 42 des Bremsbelages aufgenommen (die Reibkräfte wirken in Figur 8 nach links). Erst wenn eine Bremskraft oberhalb einer Verzögerung von 0,1 g eingeleitet wird, schlägt die Auflauffläche 46 des Bremsbelages gegen den zugeordneten Bolzen in der Ausnehmung 40' und die Bremskräfte werden mit Zugkräften (Nase 42) und Druckkräften (an der Fläche 46) aufgefangen.

Weiterhin sind die Abmessungen der Bremse so gewählt, dass die Bremsbeläge 32a, 32b bei Übertragung einer Bremskraft, die aus einem hydraulischen Bremsdruck von bis zu etwa 10 bar resultiert und entsprechend einer Fahrzeugverzögerung von bis zu etwa 1 m/s², stets nur die beschriebenen Zugkräfte am Bremsbelag wirken, während bei hydraulischen Bremsdrucken von mehr als 30 bar, entsprechend einer Fahrzeugverzögerung von mehr als 3 m/s², stets sowohl Zugkräfte als auch erhebliche Druckkräfte (wie oben beschrieben) auf die Bremsbeläge wirken. Im Übergangsbereich zwischen 10 und 30 bar wird eine langsam steigende Kraftübertragung durch Druck eingestellt. Hierdurch kann der Bremsträger leicht (mit geringem Gewicht) gebaut werden. Hohe Umfangskräfte werden auf beide Trägerarme günstig verteilt.

Die vorstehend genannten Kraftübertragungen durch Zug bzw. Druck werden bevorzugt für den fahrzeugäußeren Bremsbelag gewählt. Für die auf der inneren Fahrzeugseite angeordneten Bremsbeläge werden die Abmessungen bevorzugt so gewählt, dass diese überwiegend gezogen werden.

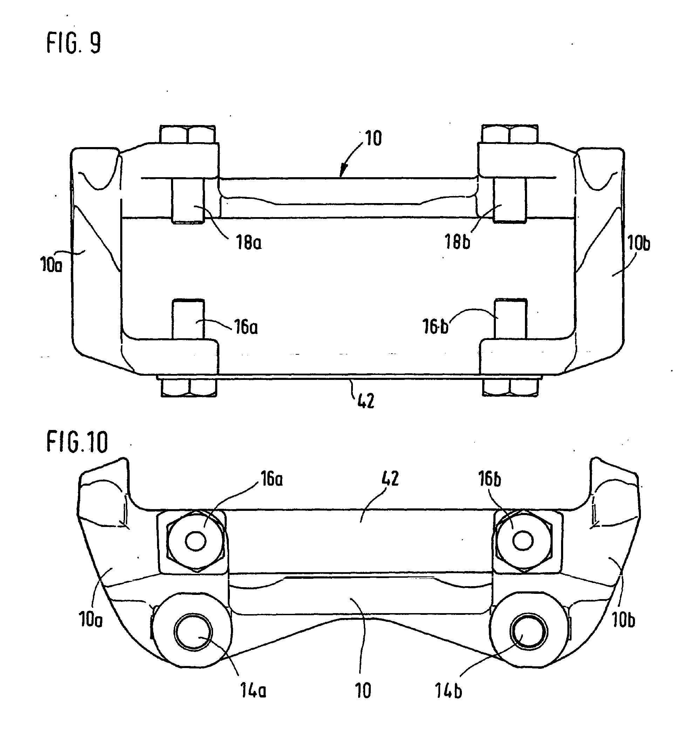

Die Figuren 9 und 10 zeigen eine besondere Ausgestaltung der Bremse, bei der der Bremsträger 10 auf der fahrzeugäußeren Seite mit einer Brücke 42 versehen ist, die die freien Arme 10a, 10b des Bremsträgers 10 miteinander verbindet. Die Brücke 42 kann z.B. aus Blech bestehen und wird mittels der Schraubenbolzen 16a, 16b verschraubt. Die Brücke 42 verstärkt den Bremsträger und kann Kräfte übertragen. Sie kann auch dazu dienen, z.B. eine Bezeichnung oder auch ein Markenzeichen anzubringen.

Die Brücke 42 kann auch als mehrschichtiges Blech ausgestaltet, insbesondere mit Dämpfungsmaterial versehen sein, bevorzugt in Sandwich-Bauweise mit der Dämpfungsschicht zwischen Metallschichten. Dabei ist bevorzugt im Bereich der Anschraubstellen (Schraubenbolzen 16a, 16b) kein Dämpfungsmaterial vorgesehen.

Die U-förmigen Ausnehmungen 40, 40' weisen entsprechend Figur 8 an ihren Böden abgerundete Übergänge zwischen den Seitenflächen auf, wobei die Übergangsradien (vgl. Bezugszeichen 48) kleiner sind als die Radien der abstützenden Bolzen 16a, 16b, 18a, 18b. Damit ist es möglich, die Berührungslinien zwischen dem Bremsbelagund dem Bolzen genauer zu definieren.

Die geringen, vorzugsweise linienförmigen Berührungsflächen der Bolzen in den U-förmigen Ausnehmungen 40, 40' ermöglichen, dass eventuelle Korrosionsprodukte aufgrund der hohen Flächenpressung entfernt werden. Schwingungen werden weitestgehend vermieden.

In den U-förmigen Ausnehmungen 40, 40' kann z.B. ein Dämpfungsblech, welches in der Form dem "U-" angepasst ist, angeordnet werden, also zwischen dem Bolzen und der Wandung der Ausnehmung. Auch können die Bolzen 16a, 16b, 18a, 18b mit einer Hülse versehen werden, insbesondere einer federnden (elastischen) Hülse, was ebenfalls eine erhöhte Dämpfung von Schwingungen bewirken kann.

Die vorstehend beschriebene Bremse hat insbesondere auch den Vorteil, dass sie besonders einfach herstellbar und montierbar ist. Bei der Herstellung reicht für die spangebende Bearbeitung des Bremsträgers nur Bohren, Anspiegeln und Gewindeschneiden.

In Abwandlung der vorstehend als Ausführungsbeispiel beschriebenen Schwimmsattelbremse kann die Erfindung auch mit einer Festsattelbremse verwirklicht werden. Insoweit entsprechen der Bremsträger und die Bolzen sowie die zugeordneten Merkmale der Bremsbeläge denen der Schwimmsattelbremse. Beim Festsattel erfolgt nur eine andere Krafteinleitung in die Bremsbeläge. Bei diesen Ausführungsformen der Erfindung ist ein besonderer Vorteil darin zu sehen, dass aufgrund der gezogenen Bremsbeläge bei einer 4-Kolben-Bremse alle Kolbendurchmesser die gleiche Größe aufweisen können. Es ist nicht erforderlich, auf der Auslaufseite größere Kolbendurchmesser vorzusehen.

## Patentansprüche

1. Scheibenbremse mit einem am Fahrzeug befestigbaren, Bolzen (16a, 16b, 18a, 18b) aufweisenden Bremsträger (10), die beim Bremsen auf zumindest einen der Bremsbeläge (32; 32a, 32b) Zugkräfte und Druckkräfte ausüben, wobei zumindest einer der Bremsbeläge (32a, 32b) mit U-förmigen Ausnehmungen (40, 40') die Bolzen umgreifend axial in Bezug auf die Bremsscheibe (38) bewegbar geführt ist, **dadurch gekennzeichnet, dass** U-förmige Ausnehmungen (40, 40') auf der Einlaufseite und auf der Auslaufseite des Bremsbelages (32a, 32b) angeordnet sind, und dass der Bremsbelag (32a, 32b) mit seinen U-förmigen Ausnehmungen (40, 40') radial von oben auf die Bolzen aufgesetzt ist.

2. Scheibenbremse nach Anspruch 1, **dadurch gekennzeichnet, dass** der auf der fahrzeugäußeren Seite angeordnete Bremsbelag (32b) mit U-förmigen Ausnehmungen die zugeordneten Bolzen (16a, 16b) umgreifend axial in Bezug auf die Bremsscheibe (38) bewegbar geführt ist.

3. Scheibenbremse nach Anspruch 1 oder 2, **dadurch gekennzeichnet, dass** beide Bremsbeläge (32a, 32b) auf beiden Seiten mit U-förmigen Ausnehmungen (40, 40') die Bolzen (16a, 16b, 18a, 18b) umgreifend axial in Bezug auf die Bremsscheibe (38) bewegbar geführt sind, und von oben auf die Bolzen aufgesetzt sind.

4. Scheibenbremse nach einem der vorhergehenden Ansprüche, **dadurch gekennzeichnet, dass** die Bremsbeläge (32a, 32b) in den U-förmigen Ausnehmungen (40, 40') Linienberührung mit den jeweils zugeordneten Bolzen (16a, 16b, 18a, 18b) aufweisen.

5. Scheibenbremse nach einem der vorhergehenden Ansprüche, **dadurch gekennzeichnet, dass** die Bolzen (16a, 16b, 18a, 18b) aus einem anderen Material als der Bremsträger (10) bestehen, insbesondere aus nicht rostendem Stahl oder dass die Bolzen mit einer Beschichtung aus nichtrostendem Material versehen sind.

6. Scheibenbremse nach einem der vorhergehenden Ansprüche, **dadurch gekennzeichnet, dass** die von den Mittelachsen der Bolzen (16a, 16b, 18a, 18b) aufgespannte Ebene einen kleineren radialen Abstand von der Bremsscheibenachse (A) hat als der Flächenschwerpunkt (F) des Reibbelages (36a, 36b).

7. Scheibenbremse nach einem der Ansprüche 1 bis 5, **dadurch gekennzeichnet, dass** die Bolzen (16a, 16b, 18a, 18b) einen kleineren radialen Abstand von der Bremsscheibenachse (A) haben als der Flächenschwerpunkt (F) des Reibbelages (36a, 36b).

8. Scheibenbremse nach einem der vorhergehenden Ansprüche, **dadurch gekennzeichnet, dass** es eine Schwimmsattelbremse, Schwimmrahmenbremse oder Festsattelbremse ist.

9. Bremsbelag (32a, 32b) für eine Scheibenbremse, die Bolzen (16a, 16b, 18a, 18b) aufweist zum Abstützen des Bremsbelages derart, dass der Bremsbelag axial in Bezug auf die Bremsscheibe (38) der Scheibenbremse bewegbar ist, wobei der Bremsbelag zwei U-förmige Ausnehmungen (40, 40') aufweist, die so bemessen sind, dass sie die Bolzen (16a, 16b, 18a, 18b) für die axiale Bewegung aufnehmen, **dadurch gekennzeichnet, dass** U-förmige Ausnehmungen (40, 40') auf der Einlaufseite und auf der Auslaufseite des Bremsbelages (32a, 32b) angeordnet sind, und dass der Bremsbelag (32a, 32b) mit seinen U-förmigen Ausnehmungen (40, 40') radial von oben auf die Bolzen aufgesetzt ist und damit bewegbar geführt ist.

10. Bremsbelag nach Anspruch 9, **dadurch gekennzeichnet, dass** die U-förmigen Ausnehmungen (40, 40') so bemessen sind, dass eine Linienberührung mit dem jeweils zugeordneten Bolzen (16a, 16b, 18a, 18b) gegeben ist.

## Claims

1. Disc brake having a brake carrier (10) that may be fastened to the vehicle and includes bolts (16a, 16b, 18a, 18b), which during braking exert tension forces and compression forces on at least one of the brake pads (32; 32a, 32b), wherein at least one of the brake pads (32a, 32b) is axially movably guided relative to the brake disc (38) with U-shaped recesses (40, 40') engaging the bolts, **characterised in that** U-shaped recesses (40, 40') are arranged at the leading side and at the trailing side of the brake pad (32a, 32b) and the brake pad (32a, 32b) is placed with its U-shaped recesses (40, 40') radially from above onto the bolts.

2. Disc brake according to claim 1, **characterised in that** the brake pad (32b) arranged on the vehicle outer side is axially movably guided relative to the brake disc (38) with U-shaped recesses engaging the associated bolts (16a, 16b).

3. Disc brake according to claim 1 or 2, **characterised in that** the two brake pads (32a, 32b) are axially movably guided on both sides relative to the brake disc (38) with U-shaped recesses (40, 40') engaging the bolts (16a, 16b, 18a, 18b) and are placed from above onto the bolts.

4. Disc brake according to any one of the preceding claims, **characterised in that** in the U-shaped recesses (40, 40') the brake pads (32a, 32b) have line contact with the respectively associated bolts (16a, 16b, 18a, 18b).

5. Disc brake according to any one of the preceding claims, **characterised in that** the bolts (16a, 16b, 18a, 18b) consist of a different material from the brake carrier (10), in particular of non-corroding steel, or **in that** the bolts are provided with a coating of non-corroding material.

6. Disc brake according to any one of the preceding claims, **characterised in that** the plane spanned by the central axes of the bolts (16a, 16b, 18a, 18b) has a smaller radial spacing from the brake disc axis (A) than the centre of area (F) of the friction pad (36a, 36b).

7. Disc brake according to any one of claims 1 to 5, **characterised in that** the bolts (16a, 16b, 18a, 18b) have a smaller radial spacing from the brake disc axis (A) than the centre of area (F) of the friction pad (36a, 36b).

8. Disc brake according to any one of the preceding claims, **characterised in that** it is a floating calliper disc brake, floating frame disc brake or fixed calliper disc brake.

9. Brake pad (32a, 32b) for a disc brake, which comprises bolts (16a, 16b, 18a, 18b) for supporting the brake pad, such that the brake pad is axially moveable relative to the brake disc (38) of the disc brake, the brake pad comprising two U-shaped recesses (40, 40'), which are so dimensioned that they receive the bolts (16a, 16b, 18a, 18b) for the axial movement, **characterised in that** U-shaped recesses (40, 40') are arranged at the leading side and at the trailing side of the brake pad (32a, 32b) and the brake pad (32a, 32b) is placed with its U-shaped recesses (40, 40') radially from above onto the bolts and is movably guided therewith.

10. Brake pad according to claim 9, **characterised in that** the U-shaped recesses (40, 40') are so dimensioned that line contact is made with the respectively associated bolts (16a, 16b, 18a, 18b).

## Revendications

1. Frein à disque comprenant un support de frein (10) pouvant être fixé au véhicule et présentant des broches vissées (16a, 16b, 18a, 18b), qui, lors du freinage, exercent sur au moins l'une des garnitures de frein (32 ; 32a, 32b) des forces de traction et des forces de pression, l'une au moins des garnitures de frein (32a, 32b) étant guidée de manière axialement mobile par rapport au disque de frein (38) en entourant, avec des encoches en forme de U (40, 40'), les broches vissées, **caractérisé en ce que** des encoches en forme de U (40, 40') sont agencées dans la garniture de frein (32a, 32b) du côté entrée dans celle-ci et du côté sortie de celle-ci, et **en ce que** la garniture de frein (32a, 32b) est engagée radialement par le haut, avec ses encoches en forme de U (40, 40'), sur les broches vissées.

2. Frein à disque selon la revendication 1, **caractérisé en ce que** la garniture de frein (32b) agencée sur le côté le plus à l'extérieur du véhicule, est guidée de manière axialement mobile par rapport au disque de frein (38) en entourant, avec des encoches en forme de U, les broches vissées associées (16a, 16b).

3. Frein à disque selon la revendication 1 ou 2, **caractérisé en ce que** les deux garnitures de frein (32a, 32b) sont, des deux côtés, guidées de manière axialement mobile par rapport au disque de frein (38) en entourant, avec des encoches en forme de U (40, 40'), les broches vissées (16a, 16b, 18a, 18b) et sont engagées par le haut sur les broches vissées.

4. Frein à disque selon l'une des revendications précédentes, **caractérisé en ce que** les garnitures de frein (32a, 32b) présentent, dans les encoches en forme de U (40, 40'), un contact linéaire avec les broches vissées (16a, 16b, 18a, 18b) respectivement associées.

5. Frein à disque selon l'une des revendications précédentes, **caractérisé en ce que** les broches vissées (16a, 16b, 18a, 18b) sont réalisées en un autre matériau que le support de frein (10), notamment en un acier inoxydable, ou bien **en ce que** les broches vissées sont pourvues d'un revêtement en un matériau inoxydable.

6. Frein à disque selon l'une des revendications précédentes, **caractérisé en ce que** le plan défini par les axes médians des broches vissées (16a, 16b, 18a, 18b) présente une distance radiale à l'axe (A) du disque de frein, qui est inférieure à celle que présente le centre de gravité de surface (F) de la garniture de friction (36a, 36b).

7. Frein à disque selon l'une des revendications 1 à 5, **caractérisé en ce que** les broches vissées (16a, 16b, 18a, 18b) présentent une distance radiale à l'axe (A) du disque de frein, qui est inférieure à celle que présente le centre de gravité de surface (F) de la garniture de friction (36a, 36b).

8. Frein à disque selon l'une des revendications précédentes, **caractérisé en ce qu'**il s'agit d'un frein à étrier flottant, d'un frein à cadre flottant ou d'un frein à étrier fixe.

9. Garniture de frein (32a, 32b) pour un frein à disque qui comporte des broches vissées (16a, 16b, 18a, 18b) destinées à supporter la garniture de frein de façon à ce que la garniture de frein soit axialement mobile par rapport au disque de frein (38) du frein à disque, la garniture de frein présentant deux encoches en forme de U (40, 40') qui sont dimensionnées de façon à recevoir les broches vissées (16a, 16b, 18a, 18b) pour le mouvement axial, **caractérisée en ce que** des encoches en forme de U (40, 40') sont agencées dans la garniture de frein (32a, 32b) du côté entrée dans celle-ci et du côté sortie de celle-ci, et **en ce que** la garniture de frein (32a, 32b) est engagée radialement par le haut, avec ses encoches en forme de U (40, 40'), sur les broches vissées, en étant ainsi guidée de manière mobile.

10. Garniture de frein selon la revendication 9, **caractérisée en ce que** les encoches en forme de U (40, 40') sont dimensionnées de façon à ce que soit réalisé un contact linéaire avec la broche vissée (16a, 16b, 18a, 18b) respectivement associée.
